Europäisches Patentamt

(19) European Patent Office

Office européen des brevets

(11) Publication number: **0 058 528**
**B1**

(12) **EUROPEAN PATENT SPECIFICATION**

(45) Date of publication of patent specification: **20.05.87**

(21) Application number: **82300692.9**

(22) Date of filing: **11.02.82**

(51) Int. Cl.⁴: **H 02 M 7/515**

(54) **Inverter Circuit.**

(30) Priority: **13.02.81 FI 810456**

(43) Date of publication of application:
**25.08.82 Bulletin 82/34**

(45) Publication of the grant of the patent:
**20.05.87 Bulletin 87/21**

(84) Designated Contracting States:
**AT BE CH DE FR GB IT LI LU NL SE**

(56) References cited:
**DE-A-1 413 550**
**FR-A-2 430 692**
**FR-E- 88 271**
**US-A-3 483 462**

(73) Proprietor: **KEMPPI OY**
**P.O. Box 233**
**SF-15801 Lahti 80 (FI)**

(72) Inventor: **Makimaa, Tapani**
**P.O. Box 13**
**SF-15801 Lahti 80 (FI)**

(74) Representative: **Nettleton, John Victor et al**
**Abel & Imray Northumberland House 303-306**
**High Holborn**
**London, WC1V 7LH (GB)**

## Description

The present invention relates to an inverter circuit comprising a source of direct voltage which itself has a center-tap or which has a center-tap in a voltage divider circuit connected across the source, and two serially connected thyristor switches which are in the forward direction connected across the source of direct voltage and each of which has an RC protection connected across the thyristor and a commutation diode antiparallel with the thyristor and a saturable reactor connected in series with the thyristor, a center branch which contains, in series connection at least one reactor and one capacitor branching out from a point between the thyristor switches to the said center-tap.

Ever since the advent on the market of thyristors as components they have been used quite extensively in inverter circuits. The present invention relates in particular to an inverter circuit in which thyristors are used in conjunction with saturable reactors. It is therefore appropriate to note that the use of saturable magnetic components in rectifier and inverter technology is not new in itself. Saturable reactors are used commonly for protecting valves (diodes, thyristors and Hg-valves) from excessive rates of change in current and voltage, as shown in the detailed description below. Premagnetized reactors and magnetic amplifiers have also been used in rectifier and inverter technology for decades. Reference is made here to the following list of publications.

List of references:

| | | |
|---|---|---|
| (1) US Patent | 3,324,380 | |
| (2) US Patent | 3,321,695 | |
| (3) SE Lay-Open Print | 316,862 | |
| (4) SE Patent | 227,486 | |
| (5) GB Patent | 1,407,594 | |
| (6) GB Patent | 1,360,112 | |
| (7) CH Patent | 475,669 | |
| (8) CH Patent | 467,549 | |
| (9) US Patent | 2,635,222 | |
| (10) US Patent | 2,857,563 | |
| (11) Seeling, T. | Thyristorwechselrichter mit sättigbaren Drosseln für Mittelfrequenzanwendungen IEEE Trans. on Magnetics, Vol. MAG-2, No. 3, Sept. 1966 | |
| (12) Min. B. J. Wearsch, H. W. | An Improved Snubber Circuit for Power Semiconductors IAS 77, Annual | |
| (13) Meyer, Manfred | Beanspruchung von Thyristoren in selbstgeführten Stromrichtern Siemens Zeitschrift Mai 1965, Heft 5 | |
| (14) | Technische Mitteilungen 4, 5, 9 AEG | |

For example, reference (14) discloses the use of saturable reactors for reducing the turn-on and turn-off losses of thyristors. The same subject is also dealt with in references (5), (8) and (13). The use of saturable reactors for voltage increase rate protection is dealt with in, for example, references (2), (5) and (12).

Saturable reactors have further been used for equalizing the turn-on delays of thyristors connected in parallel (14) and also in series connections for the equalization of voltage division when thyristors turn on (7).

Appendix (11) discloses a method, substantially in accordance with the Morgan principle, for increasing the effective frequency of a resonance inverter, and appendices (1) and (10) disclose applications of magnetic amplifiers.

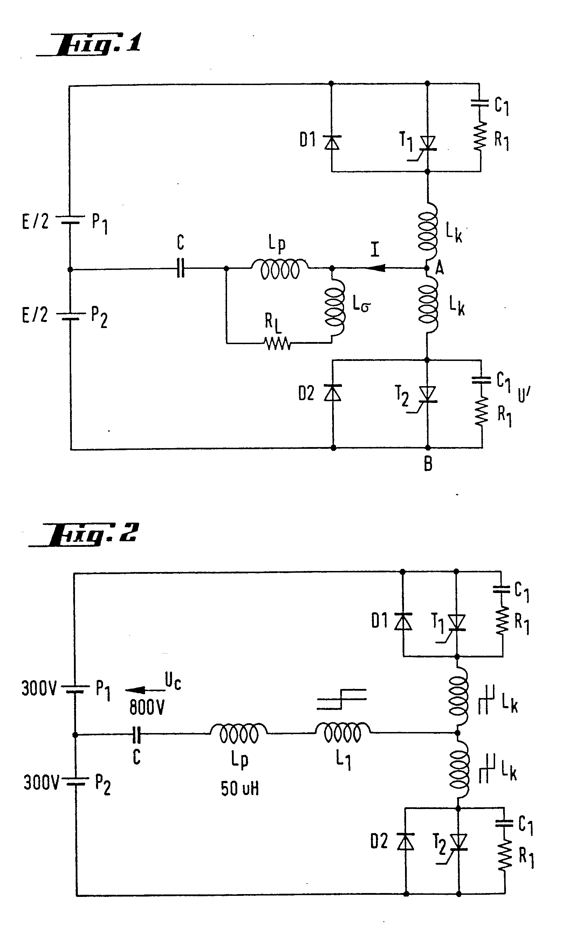

The circuit according to accompanying Figure 1 is discussed below; it is made up of batteries $P_1$ and $P_2$, thyristors $T_1$ and $T_2$, protecting coils $L_k$, RC protections $R_1$, $C_1$, commutation capacitor C, main inductance $L_p$, leakage inductance $L_\sigma$, as well as load $R_L$ and commutation diodes D1 and D2. The purpose of the protecting coils $L_k$ is to protect the thyristors $T_1$ and $T_2$ from excessive rates of current increase and, together with the RC protections, from an excessive rate of voltage increase. $L_p$ together with C forms the actual commutation circuit, the purpose of which is to turn off the thyristor, as known from the literature (Bedford-Hoft: Principles of Inverter Circuits).

When the frequency is low (less than 1 kHz), $L_k$ $C_1 R_1$ can easily be dimensioned so that, when nowadays generally available thyristors are used and E is 500—600 V (a 380 V voltage rectified with a three-stage bridge), the allowed dV/dt and dI/dt values of the thyristor will not be surpassed and, on the other hand, the losses of the RC protections remain moderate. When the frequency increases, the coils $L_p$, $L_\sigma$ and $L_k$ and the capacitor C must be decreased. As a result, the dI/dt and dV/dt of the thyristors increase if $R_1$ and $C_1$ remain constant since, as known,

$$\frac{dV}{dt} \, max \simeq \frac{E}{2L_k} R_1 \qquad (1)$$

As evident from (1), the problem can be corrected by decreasing $R_1$, but as a result $C_1$ must be increased in order that the circuit $2L_k$ $R_1$ $C_1$ remain sufficiently attenuated and not cause voltage spikes. If a critically attenuated resonance circuit is taken as the criterion, the value obtained for $C_1$ is

$$C_1 = \frac{8L_k}{R_1{}^2} \qquad (2)$$

i.e., the increasing of $C_1$ follows from the decreasing of $R_1$. Since the power loss of the RC protections is of the form

$$P_{loss} \sim E^2 f \, C_1 \qquad (3)$$

the power loss increases quite rapidly when the frequency increases. The absolute value of the power loss is strongly dependent on the requirements set and on the components available. In the example case presented below, the tolerable limit in practice is below 5 kHz. In addition, it is advisable to keep in mind that a thyristor will not tolerate all kinds of RC protection. Manufacturers often give an upper limit for $C_1$ and a lower limit for $R_1$. For this reason the frequency cannot be increased indefinitely even at the expense of losses from the RC protection.

One known method to make simultaneously possible the small coils $L_k$ required by a high frequency and the high inductances of $L_k$ required by small losses is to make the coils $L_k$ saturable. This is based on the fact that, during actual operation, the currents are so high that $L_k$ is in a saturated state and its inductance is small, thereby allowing a rather high frequency.

Instead, when the RC protections $R_1 C_1$ are operating, the current of the coil $L_k$ concerned is low, in which case the coil is in an unsaturated state and its inductance is high, in which case, on the basis of (1), dV/dt is small and, as can be seen from (1) and (2), C can be maintained small, in which case losses are small. In practice the inductance of $L_k$ in the unsaturated state can be as high as 500 times its inductance in the saturated state, and even greater changes are possible. This method has, however, a serious disadvantage, as shown below.

If it is assumed that $T_1$ has just ceased conducting and I is commutating to $D_1$ in a conventional manner, in this situation the voltage of $U_c$ is at its maximum and $L_k$ is in an unsaturated state, in which case its inductance is typically of the order of 100—200 µH.

In this case the voltage of point A against B, i.e., in practice the voltage effective across $T_2$, may rise very high since

$$U' \cong E + (U_c - \frac{E}{2}) \frac{L_k}{L_p + L_k}; \; (R_L = \infty) \qquad (4)$$

When, on the basis of the above, $E/2 \approx 300$ V and the voltage $U_c$ of capacitor C, e.g. $\approx 800$ V, are substituted

$$U' \cong 600 \text{ V} + (800 \text{ V} - 300 \text{ V}) \frac{200 \text{ µH}}{250 \text{ µH}} = 1000 \text{ V}$$

is obtained.

3

**0 058 528**

The significance of the matter increases because, when the order of the voltage of the thyristor increases, the highest speeds of the thyristors decrease, and thus, when the aim is to use high frequencies, it is necessary to use thyristors of relatively low voltages. On the other hand, connecting thyristors in series is an expensive and technically rather difficult solution.

FR—A—2 430 692 discloses a converter circuit employing thyristors for use in induction heating. The output of a rectifier bridge is connected to a smoothing capacitor and to a circuit in the form of an 'H'. One vertical of the 'H' is constituted by two commutation capacitors in series, and the other vertical of the 'H' is constituted by two controlled switching circuits in series. Each switching circuit comprises a thyristor in series with a saturable reactor, each thyristor being connected in anti-parallel with a diode and in parallel with the series combination of a resistor and a capacitor. A respective resistor is connected in parallel with each switching circuit. The induction heating coil lies in the horizontal limb of the 'H'.

DE—A—1 413 550 discloses an inverter circuit in which a capacitor has one pole connected to zero potential and its other pole connected through respective series circuits to positive and negative terminals of a D.C. supply, each series circuit comprising an inductor connected in series with a thyristor. The series combination of an inductor and a saturable reaction is connected in parallel with the capacitor.

An object of the present invention is to eliminate the above-mentioned problem, i.e. to reduce the voltage peak involved when saturable reactors are used.

The invention as claimed provides an inverter circuit comprising a source of direct voltage which itself has a center-tap or which has a center-tap in a voltage divider circuit connected across the source, and two serially connected thyristor switches which in the forward direction are connected across the source of direct voltage and each of which has an RC protection (R1, C1) connected across the thyristor ($T_1$, $T_2$) and a commutation diode (D1; D2) antiparallel with the thyristor, and a saturable reactor ($L_k$) connected in series with the thyristor, a center branch which contains, in series connection, at least one reactor ($L_p$) and one capacitor (C) branching out from a point between the thyristor switches to the said center-tap, characterized in reactor ($L_p$, $L_1$) contained in the said center branch also consists at least in part of a saturable reactor ($L_1$), said saturable reactor ($L_1$) in the center branch being so dimensioned that, regardless of the current, the ratio between the inductances of that reactor and of the reactor ($L_k$) in series with the thyristor remains essentially constant.

The essential idea of the invention is thus that, in addition to the reactors which are in series with the thyristors, the reactor in the center branch of the circuit is also saturable. Advantageously, the reactor of the center branch is made up of a series connection of a constant-size reactor and a saturable reactor.

By using a circuit according to the invention, the voltage increase rate of thyristors can be reduced without increasing their voltage strain or the power loss of the RC protection. This means also in practice that the technical-economic maximum operating frequency of the thyristors can be increased, even multiplied.

One way of carrying out the invention is described in detail below with reference to drawings which illustrate only one specific embodiment, in which:—

Figure 1 depicts the already described known circuit, and Figure 2 depicts a circuit according to the present invention.

The circuit according to Figure 2 corresponds generally to the circuit according to Figure 1 except that reactors $L_k$ are saturable and, according to the present invention, in Figure 2 there is a third saturable reactor $L_1$ connected in series with the center branch $L_p$ of the circuit.

When this reactor $L_1$ is dimensioned so that, regardless of the current,

$$L_1 = k\,L_k \tag{5}$$

where k is a suitable constant, the voltage spike can be eliminated almost completely.

If, for example $L_k$ is the same as in the previous example, and in Formula (5) k=3, by substituting in (4) we obtain

$$U' \cong E + (V_c - \frac{E}{2}) \cdot \frac{L_k}{L_p + L_k + L_1}$$

$$= 600\ \text{V} + (800\ \text{V} - 300\ \text{V}) \frac{200\ \mu\text{H}}{50\ \mu\text{H} + 200\ \mu\text{H} + 600\ \mu\text{H}}$$

$$\cong 718\ \text{V}$$

i.e. the voltage peak has dropped almost 30%. Here it should be noted that the voltage of C can be even much higher than the above-mentioned 800 V, in which case the advantage gained by using a saturable additional reactor $L_1$ becomes even more emphasized.

Thus, by applying the circuit according to the invention, the voltage increase rate of thyristors can be reduced without increasing their voltage strain or the power loss of the RC protection. This means also in

4

practice that the technical-economic maximum operating frequency of the thyristors can be increased, even multiplied.

Finally, it should be pointed out that the circuits of Figures 1 and 2 to some extent show only the principle. In practice there is usually only one source of voltage E, and across this source there has been connected a voltage divider consisting of, for example, two capacitors, and the center point of the voltage divider serves as the said center-tap. The reactor $L_p$ for its part may be made up of, for example, the primary winding of a transformer of which a secondary winding supplies the load.

**Claims**

1. An inverter circuit comprising a source of direct voltage which itself has a center-tap or which has a center-tap in a voltage divider circuit connected across the source, and two serially connected thyristor switches which in the forward direction are connected across the source of direct voltage and each of which has an RC protection (R1, C1) connected across the thyristor ($T_1$, $T_2$) and a commutation diode (D1; D2) antiparallel with the thyristor, and a saturable reactor ($L_k$) connected in series with the thyristor, a center branch which contains, in series connection at least one reactor ($L_p$) and one capacitor (C) branching out from a point between the thyristor switches to the said center-tap, characterized in that the reactor ($L_p$, $L_1$) contained in the said center branch also consists at least in part of a saturable reactor ($L_1$), said saturable reactor ($L_1$) in the center-branch being so dimensioned that, regardless of the current, the ratio between the inductances of that reactor and of the reactor ($L_k$) in series with the thyristor remains essentially constant.

2. A circuit according to Claim 1, characterized in that the reactor of the center branch consists of a series connection of a saturable reactor ($L_1$) and a fixed reactor ($L_p$).

3. A circuit according to Claim 1 or 2, characterized in that the reactor of the center branch consists in part ($L_p$) of the primary winding of a transformer.

**Patentansprüche**

1. Eine Inverterschaltung, umfassend eine Gleichspannungsquelle, die selbst eine Mittelanzapfung aufweist oder eine Mittelanzapfung in einem über die Quelle gelegten Spannungsteilerschaltkreis aufweist, und zwei seriengeschlatete Thyristorschalter, die in Durchlaßrichtung über die Gleichspannungsquelle geschaltet sind und deren jeder einen RC-Schutz (R1, C1) über dem Thyristor ($T_1$, $T_2$) sowie eine Schaltdiode (D1, D2) antiparalle zum Thyristor aufweist, sowie eine sättigbare Reaktanz ($L_k$) in Serie mit dem Thyristor, wobei ein Mittelzweig, der in Serienschaltung mindestens eine Reaktanz ($L_p$) und einen Kondensator (C) enthält, von einem Punkt zwischen den Thyristorschaltern zu der genannten Mittelanzapfung geführt ist, dadurch gekennzeichnet, daß die Reaktanz ($L_p$, $L_1$) in dem genannten Mittelzweig auch mindestens teilweise aus einer sättigbaren Reaktanz ($L_1$) besteht, welche sättigbare Reaktanz ($L_1$) im Mittelzweig so dimensioniert ist, daß, unabhängig vom Strom, das Verhältnis zwischen den Induktanzwerten jener Reaktanz und der Reaktanz ($L_k$) in Serie mit dem Thyristor im wesentlichen konstant bleibt.

2. Eine Schaltung nach Anspruch 1, dadurch gekennzeichnet, daß die Reaktanz des Mittelzweiges aus einer Serienschaltung einer sättigbaren Reaktanz ($L_1$) und einer festen Reaktanz besteht.

3. Eine Schaltung nach Anspruch 1 oder 2, dadurch gekennzeichnet, daß die Reaktanz des Mittelzweiges zum Teil ($L_p$) aus der Primärwicklung eines Transformators besteht.

**Revendications**

1. Un circuit onduleur comprenant une source de tension continue qui est pourvue elle-même d'une prise centrale ou qui a une prise centrale placée dans un circuit de division de tension relié aux bornes de la source, et deux commutateurs à thyristors reliés en série qui, dans le sens direct, sont reliés aux bornes de la source de tension continue et qui comportent chacun une protection RC (R1, C1) connectée aux bornes des thyristors ($T_1$, $T_2$) et une diode de commutation (D1; D2) saturable et branchée en antiparallèles avec les thyristors, ainsi qu'une réactance ($L_k$) reliée en série avec les thyristors, une dérivation centrale qui contient, dans une liaison en série, au moins une réactance ($L_p$) et un condensateur (C) partant d'un point situé entre les commutateurs à thyristors et ladite prise centrale, caractérisé en ce que la réactance ($L_p$, $L_1$) contenue dans ladite dérivation centrale se compose également au moins en partie d'une réactance saturable ($L_1$), ladite réactance saturable ($L_1$) de la dérivation centrale étant dimensionnée de façon que, indépendamment du courant, le rapport entre les inductances de cette réactance et de la réactance ($L_k$) branchée en série avec les thyristors reste sensiblement constant.

2. Un circuit conforme à la revendication 1, caractérisé en ce que la réactance de la dérivation centrale se compose d'un connexion-série d'une réactance saturable ($L_1$) et d'une réactance fixe ($L_p$).

3. Un circuit conforme à la revendication 1 ou 2, caractérisé en ce que la réactance de la dérivation centrale est constituée d'une partie ($L_p$) de l'enroulement primaire d'un transformateur.

Fig.1

Fig.2

1